**Europäisches Patentamt**

**European Patent Office**

**Office européen des brevets**

(19)

(11) Veröffentlichungsnummer: **0 137 167**

**A2**

(12)

# EUROPÄISCHE PATENTANMELDUNG

(21) Anmeldenummer: 84108967.5

(22) Anmeldetag: 28.07.84

(51) Int. Cl.⁴: **C 08 J 5/06**
C 08 J 5/24
//B29C67/14

(30) Priorität: 11.08.83 DE 3329127

(43) Veröffentlichungstag der Anmeldung:
17.04.85 Patentblatt 85/16

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Preis, Lothar, Dr.
August-Kierspel-Strasse 42
D-5060 Bergisch-Gladbach 2(DE)

(72) Erfinder: Schmidt, Rudolf
Am Jungholzkamp 22
D-5093 Burscheid 1(DE)

(72) Erfinder: Esser, Josef
Charlottenburger Strasse 60
D-5090 Leverkusen 1(DE)

(72) Erfinder: Magg, Hans, Dr.
Ulmenallee 7
D-5060 Bergisch Gladbach 1(DE)

(54) Verstärkungselemente für Elastomere, Herstellung der verstärkten Elastomere und verstärkte Elastomere.

(57) Mit Faserverbundwerkstoffen verstärkte Elastomere mit verbesserten Eigenschaften werden erhalten, wenn man als Festigkeitsträger Verbundwerkstoffe auf Basis von Verstärkungsfasern und Reaktionsharzen verwendet, die mit Haftvermittlern auf Polyisocyanatbasis ausgerüstet sind.

BAYER AKTIENGESELLSCHAFT    5090 Leverkusen, Bayerwerk

Konzernverwaltung RP
Patentabteilung            Jo/Ke-c


Verstärkungselemente für Elastomere, Herstellung der
verstärkten Elastomere und verstärkte Elastomere

Elastomere mit dehnungsarmen, hochfesten, verstärkenden
Einlagen sind in vielfältigen Ausführungen im Gebrauch.
Dabei haben die meist fadenartigen oder gewobenen Elemente die Aufgabe, die Dimensionsstabilität der Elastomere zu gewährleisten, wenn sie deformierenden Kräften
ausgesetzt sind.

Die Art des verstärkenden Elementes richtet sich nach
der zu erwartenden Beanspruchung. So werden für dynamisch
beanspruchte Artikel, z.B. Antriebselemente, Festigkeitsträger aus Textilfasern, beispielsweise aus Cellulosederivaten, Polyamiden, Polyestern oder Polyvinylalkohol
oder aus Glasfasern wegen ihrer Flexibilität bevorzugt.
Bei statischer Beanspruchung kann dagegen geringere
Flexibilität von Vorteil sein. In diesen Fällen verwendet man z.B. Stahlseile, die mit Messing oder Zink
plattiert sein können.

Von besonderem Interesse als Festigkeitsträger für Elastomere sind faserverstärkte Verbundwerkstoffe, vorzugsweise mit unidirektionaler Faserorientierung, wegen

Le A 22 454-EP

ihrer hohen Zugfestigkeit, ihrer guten Korrosionsbeständigkeit sowie ihres niedrigen Gewichts.

Die üblichen Faserverbundwerkstoffe auf Basis von Glas- oder Kohlenstoffasern und Reaktionsharzen, wie UP- oder EP-Harzen (ungesättigte Polyesterharze, Epoxidharze), eignen sich jedoch für diese Aufgabe nicht, weil ihre Haftung zur Elastomermatrix so niedrig ist, daß die verstärkenden Eigenschaften nur in geringem Umfang genutzt werden können.

Auch die bekannten Haftvermittler, hauptsächlich Verbindungen des Resorcins mit Formaldehyd, etwa Resorcin-Formaldehyd-Novolake oder Resorcin selbst, Metallverbindungen oder Umsetzungsprodukte aus schwachen organischen Basen mit Formaldehyd, führen bei den erwähnten Faserverbundwerkstoffen nicht zum Erfolg.

Aufgabe der vorliegenden Erfindung ist es daher, die bestehenden Schwierigkeiten zu überwinden und Faserverbundwerkstoffe zur Verfügung zu stellen, die als Bewehrungsmaterial für Elastomere geeignet sind. Diese Aufgabe wird erfindungsgemäß dadurch gelöst, daß als Festigkeitsträger Verbundwerkstoffe auf Basis von Verstärkungsfasern und Reaktionsharzen verwendet werden, die mit Haftvermittlern auf Polyisocyanatbasis ausgerüstet sind.

Vorzugsweise werden als Festigkeitsträger nicht vollständig ausgehärtete Verbundwerkstoffe, in folgendem als Prepregs bezeichnet, eingesetzt.

Le A 22 454

0137167

Prepregs sind nach DIN 61 850 Formmassen aus flächigen oder linienförmigen Verstärkungsstoffen, die mit härtbaren Harzmassen vorimprägniert sind. Im Sinne der vorliegenden Erfindung sind Prepregs nicht auf Glasfasern beschränkt; Glasfasern sind jedoch bevorzugt.

Die Herstellung der Verbundwerkstoffe erfolgt dadurch, daß Stränge aus Verstärkungsfasern, z.B. aus Glasfasern, mit einem flüssigen Reaktionsharz, das vorzugsweise alle zur Erreichung der gewünschten Endeigenschaften erforderlichen Zusätze wie Härter, Vernetzungsmittel, Beschleuniger, Füllstoffe, Stabilisatoren, Flammschutzmittel sowie Lösungsmittel enthält, imprägniert werden. Im nächsten Schritt werden die einzelnen Stränge zusammengefaßt, gegebenenfalls vorhandenes Lösungsmittel wird vorab, z.B. durch Trocknung in einem Heißluftkanal, entfernt und das Faserbündel mit einem Haftvermittlersystem ausgerüstet. Der Auftrag des Haftvermittlersystems kann sowohl im Anschluß an die Imprägnierung mit dem Reaktionsharz im gleichen Arbeitsgang als auch separat durchgeführt werden. Vorzugsweise werden die Faserstränge vor der Beschichtung mit dem Haftvermittlersystem radial mit Synthesefasern, z.B. aus Polyamid, Polyester, Cellulosederivaten oder Polyacrylnitril umwickelt. Nach dem Auftrag des Haftvermittlersystems wird das Vorprodukt bei erhöhter Temperatur vorpolymerisiert bzw. vorkondensiert.

Der erfindungsgemäße Festigkeitsträger wird schließlich in eine Mischung aus vernetzbarem Kautschuk auf Grundlage beispielsweise von Naturkautschuk, Polychloropren, Polyisopren, Styrolbutadienkautschuk oder chloriertem

Le A 22 454

Polyethylen, die alle für die Erzielung bestimmter Elastomereigenschaften notwendigen Zuschlagstoffe wie Füllstoffe, Verarbeitungshilfsmittel, Alterungsschutzmittel oder Vernetzungsmittel enthält, eingebettet. Der Kautschuk wird daraufhin vulkanisiert.

Die Vulkanisationstemperatur wird in praxisgerechter Weise ausgewählt, z.B. 120 - 220°C, bevorzugt 140 - 180°C. Bei der Vulkanisation, die bei Über- oder Normaldruck erfolgen kann, wird ein inniger Verbund zwischen Festigkeitsträgern und Kautschukmatrix erzeugt. Die Prepregs werden unter den Bedingungen der Vulkanisation ausgehärtet.

In den Festigkeitsträgern eignen sich neben Glasfasern beispielsweise auch Polyester-, Polyamid-, Aramid-, Reyon-, Polyvinylalkohol-, Kohlenstoff- und Metallfasern. Die Fasern können in Form von Fasersträngen, wie Garnen, Filamentgarnen, Zwirnen, Rovings und Spinnfäden oder textilen Flächengebilden eingesetzt werden. Vorzugsweise weisen die Festigkeitsträger unidirektionale Faserorientierung auf. Glasfasern sind bevorzugt.

Die Fasern sind insbesondere endlos (Filamente). Die Stärken der Fasern können in weiten Grenzen schwanken. Vorzugsweise haben die Fasern Durchmesser zwischen 5 und 25 µm, insbesondere, wenn es sich um Glasfasern handelt.

Geeignete Reaktionsharze sind z.B. ungesättigte Polyesterharze, Epoxidharze, Phenolharze, Polyurethanharze, Polyimidharze und Cyanatharze. Ungesättigte Polyesterharze und Epoxidharze sind bevorzugt.

Le A 22 454

Das Haftvermittlersystem enthält einen Kautschuk, z.B. Naturkautschuk, Polyisopren, Styrolbutadienkautschuk, Polychloropren oder Nitrilkautschuk, und ein Polyisocyanat als Vernetzer, wie Hexamethylendiisocyanat, Diphenylmethandiisocyanat, Polymethylen-Polyphenylenisocyanate, die sich vom 4,4'-Diphenylmethan-diisocanat ableiten, Triphenylmethantriisocyanat, Thionophosphorsäure-tris-(p-isocanatophenylester). Diphenylmethandiisocyanat, Triphenylmethantriisocyanat und Thionophosphorsäure-tris-(p-isocyanatophenylester) sind bevorzugt. Der Kautschuk kann übliche Zusätze wie Füllstoffe, Metalloxide, Weichmacher, Alterungsschutzmittel, Schwefel oder Beschleuniger enthalten. Das Haftvermittlersystem kann weitere Zusätze wie Epoxide, z.B. Glyceringlycidether oder Bisphenol-A-diglycidether enthalten. Der Epoxidgehalt beträgt 5 - 300 % des Kautschukgehaltes. Das Epoxid wird als Lösung eingesetzt.

Das Gewichtsverhältnis Kautschuk : Isocyanat beträgt 1 : 0,2 bis 1 : 3, bevorzugt 1 : 0,5 bis 1 : 2.

Das Gewichtsverhältnis Elastomer : Verstärkungselement liegt zwischen 0,3 und 0,01, vorzugsweise zwischen 0,15 und 0,05.

Die Haftvermittlerlösung wird durch Tauchen des Festigkeitsträgers, durch Pinselauftrag oder durch Besprühen aufgebracht, wobei der Vorgang mehrmals wiederholt werden kann. Die Haftvermittlerlösung wird erhalten, indem man eine Lösung des Kautschuks in geeigneten Lösungsmitteln, wie aliphatischen oder aromatischen Kohlen-

Le A 22 454

wasserstoffen, bevorzugt Benzin, Benzol, Toluol, Ethylacetat, Methylethylketon, Methylenchlorid oder Perchlorethylen, mit einer Lösung des Isocyanates in ebensolchen Lösungsmitteln so vermischt, daß sich die gewünschten Masseverhältnisse ergeben. Für die Herstellung
der Kautschuklösung wird die auf einem Walzwerk oder
Innenmischer plastifizierte und gegebenenfalls mit weiteren Zusätzen versehene Kautschukmischung in einen Lösungskneter überführt und dort in dem Lösungsmittel gelöst. Die Konzentration des Kautschuks in der Lösung
soll 1 - 25 Gew.-%, bevorzugt 5 - 15 Gew.-% betragen.

Für die erfindungsgemäß verstärkten Elastomere kommen als
Einsatzgebiete flexible Lager für Brücken- und Stahlbetonfertigteilträger, vor allem in erdbebengefährdeten und
Bergsenkungsgebieten, Stoß- und Schwingungsdämpfer im
Maschinen- und Fahrzeugsektor, Verstärkungselemente in
Form von Bändern für großvolumige Gummibehälter, z.B. zum
Transport von Flüssigkeiten im Meer, Schlauchleitungen,
Förderbänder, Keilriemen mit nichtgestützen Flanken
in Frage. Durch die Verstärkungen werden die flexiblen
Eigenschaften des Elementes nach dem Beanspruchungsprofil steuerbar.

Le A 22 454

## Beispiel 1

6 Rovingstränge aus E-Glas mit einem Titer von jeweils 2.400 Tex wurden in ein Imprägnierbad geführt, mit einem ungesättigten Polyesterharz auf Basis ethoxiliertes Phenol und Maleinsäureanhydrid, 60 gew.-%ig in Styrol, Säurezahl max. 15, Viskosität bei 20°C, 3000 mPa.s, getränkt und zusammengefaßt. Das imprägnierte Faserbündel wurde mit 1,5 Gew.-%, bezogen auf Festigkeitsträger an verstreckten Polyesterfasern (Gesamttiter 140 dtex) gegenläufig umwickelt und in einer nachfolgenden Härtungsstrecke (Umluftofen) bei 130 - 140°C ausgehärtet.

Die so hergestellten Festigkeitsträger hatten einen runden Querschnitt (Durchmesser 3,2 mm) und eine Zugfestigkeit von 1.466 N/mm². Der Glasfaseranteil betrug 81,6 Gew.-%. Die Oberfläche der Festigkeitsträger wurde mit der Haftvermittlerlösung nach Methode A, durch eine Beschichtungsdüse beschichtet und bei 80°C getrocknet, bis der Haftvermittlerfilm keine Klebrigkeit mehr zeigte.

Der Gesamtauftrag an Haftvermittler betrug 0,8 Gew.-%, bezogen auf das Gewicht des Festigkeitsträgers.

## Beispiel 2

Aus 18 Rovingsträngen aus E-Glas gemäß Beispiel 1 und einem ungesättigten Polyesterharz auf Basis Isophthalsäure/Maleinsäureanhydrid und Diethylenglykol/Monopropylenglykol, 60 gew.-%ig in Styrol, Säurezahl max. 25, Viskosität 1000 bis 1300 mPa.s, wurden gemäß Beispiel

Le A 22 454

Rundprofile mit einem Durchmesser von 6 mm, einer Bruchkraft von 37,6 kN und einem Glasfasergehalt von 79,7 Gew.-% hergestellt. Die Ausrüstung dieser Profile erfolgte mit einer Haftvermittlerlösung nach Methode B. Der Haftvermittlerauftrag lag bei 1,2 Gew.-%.

Beispiel 3

Ein E-Glas-Roving von 1.200 Tex wurde mit einem ungesättigten Polyesterharz auf Basis Isophthalsäure und Styrol als Vernetzer imprägniert und gemäß Beispiel 1 mit Polyesterfasern umwickelt. Anschließend erfolgte die Ausrüstung der Oberfläche des imprägnierten Faserstrangs mit einer Haftvermittlerlösung nach Methode B.

Der imprägnierte und beschichtete Faserstrang wurde bei 80°C getrocknet und vorkondensiert. Es wurde ein Prepregelement mit einem Glasanteil von 80,2 Gew.-%, einem Nenn-Durchmesser von 0,9 mm und einer Bruchkraft von 1.065 N erhalten.

Die Haftvermittlerlösungen werden nach den nachstehend beschriebenen Methoden A oder B hergestellt.

Methode A

100 g Polychloropren wurden bis zur Fellbildung auf ein Laborwalzwerk gegeben und mit 7 g Magnesiumoxid vermischt. Anschließend wurde die Mischung in einem Laborlösungskneter in 1.763 g Perchlorethylen gelöst und zuletzt mit 100 g Diglycidylether, gelöst in 100 g Perchlor-

Le A 22 454

ethylen, versetzt. Aus dieser Grundlösung wird die Haftvermittlerlösung nach folgender Rezeptur gemischt:

| | |
|---|---|
| Grundlösung (10 % Feststoffgehalt) | 100 g |
| Triphenylmethantriisocyanat 20 %ig in Methylenchlorid | 100 g |
| Perchlorethylen | 40 g |

Methode B

100 g Polychloropren wurden bis zur Fellbildung mit 7 g Magnesiumoxid vorgemischt und in einem Laborlösungskneter mit vierfachem Überschuß eines Lösungsmittelgemisches aus Benzin und Toluol im Verhältnis 1 : 1 gelöst. Die Haftvermittlerlösung wurde aus 100 g dieser Grundlösung und 100 g Triphenylmethantriisocyanat (20%ig in Methylenchlorid) hergestellt.

Die Ausrüstung der Oberfläche der Verstärkungselemente mit Haftvermittlerlösungen A oder B erfolgte bei bzw. nach der Herstellung dieser Elemente, indem mit dem Reaktionsharz imprägnierte Verstärkungsfaserstränge vor der Vorpolymerisations- bzw. Vorkondensationsstufe bzw. nach der Aushärtung, z.B. mit Hilfe von Beschichtungsdüsen oder Walzen, durch Besprühen, Tauchen oder Pinselauftrag beschichtet wurden. Danach trocknet man bei etwa 80°C bis der Haftvermittlerfilm keine Klebrigkeit mehr zeigt. Ebenso kann auch bei Raumtemperatur getrocknet werden, bis keine Klebrigkeit mehr vorhanden und somit die haftvermittelnde Schicht frei von Lösungsmit-

Le A 22 454

telresten ist. Dieser Vorgang kann, wenn erforderlich,
wiederholt werden, um dickere Haftmittelschichten zu
erreichen.

Bei der Überprüfung der Haftung zwischen dem nach einem
der obigen Verfahren vorbereiteten Verstärkungselement
und vulkanisiertem Kautschuk wurde auf Mischungen unterschiedlicher Zusammensetzung zurückgegriffen.

Le A 22 454

Rezeptur I

| | |
|---|---:|
| Polychloropren | 100 g |
| Stearinsäure | 1 g |
| styrolisiertes Diphenylamin | 2 g |
| Ozonschutzmittel | 2 g |
| Ozonschutzwachs | 0,8 g |
| gefällte, aktive Kieselsäure | 35 g |
| Diethylenglykol | 20 g |
| Russ N-800 | 10 g |
| Mineralölweichmacher | 10 g |
| Bleimennige | 20 g |
| Ethylenthioharnstoff | 0,8 g |
| Mercaptobenzthiazoldisulfid | 0,4 g |
| Resorcindiacetat | 4 g |
| Hexamethylolmelaminpentamethylether | 2,3 g |

Rezeptur II

| | |
|---|---:|
| Polychloropren | 100 g |
| Magnesiumoxid | 4 g |
| Stearinsäure | 1,5 g |
| styrolisiertes Diphenylamin | 1,5 g |
| N-Phenyl-N'-1,3-Dimethylpentyl-p-phenylendiamin | 1 g |
| Ozonschutzwachs | 1 g |
| Russ N-330 | 55 g |
| Mineralölweichmacher | 10 g |
| Diphenylkresylphosphat | 10 g |
| Zinkoxid | 5 g |
| Ethylenthioharnstoff | 0,6 g |
| Mercaptobenzthiazoldisulfid | 0,5 g |
| Schwefelpaste (75 %ig in Wasser) | 1 g |

Le A 22 454

Rezeptur III

| | |
|---|---|
| Styrol-Butadien-Kautschuk | 90 g |
| Polybutadien | 10 g |
| Stearinsäure | 1 g |
| Phenyl-ß-naphthylamin | 1 g |
| gefällte, aktive Kieselsäure | 25 g |
| Russ N-330 | 30 g |
| Xylol-Formaldehyd-Harz | 10 g |
| Zinkoxid | 6 g |
| Schwefelpaste (75 %ig in Wasser) | 5,3 g |
| N,N-Dicyclohexyl-thiobenzthiazol | 0,7 g |
| Gemisch aus Resorcin und Methylolmelamin-pentamethylether 1 : 1 | 6 g |

Rezeptur IV

| | |
|---|---|
| Polychloropren | 100 g |
| Polybutadien | 10 g |
| Stearinsäure | 1 g |
| Magnesiumoxid | 4 g |
| styrolisiertes Diphenylamin | 3 g |
| gefällte, aktive Kieselsäure | 25 g |
| Russ N-330 | 25 g |
| heller, inaktiver Füllstoff | 20 g |
| Aluminiumoxid-hydrat | 5 g |
| Chlorparaffin | 15 g |
| Mineralölweichmacher | 5 g |
| Zinkoxid | 5 g |
| Schwefel | 1 g |
| Bleioxid | 2 g |

Le A 22 454

0137167

Die Mischungen wurden in der üblichen Weise auf dem Laborwalzwerk oder dem Laborinnenmischer hergestellt. Die Vulkanisation zusammen mit den Verstärkungselementen zu einem Verbundelement wurde unter Überdruck in geeigneten Vulkanisationsformen durchgeführt. Die Vulkanisationsbedingungen sind der Tabelle zu entnehmen.

Nach Entformung wurde an dem erkalteten Verbundelement die Haftung bestimmt. Dabei stehen zwei Methoden zur Verfügung.

a) Für die Prüfung nach der T-Testmethode (vgl. Bayer Mitteilungen für die Gummi-Industrie Nr. 29, Dezember 1961) werden Prüfkörper der Abmessung 20 x 15 x 6 mm hergestellt. Mit Hilfe eines handelsüblichen Zugprüfgerätes werden die Verbundkörper bei 80°C getrennt und die für die Trennung erforderliche maximale Trennkraft gemessen. Die Prüfgeschwindigkeit beträgt 100 mm/Min.

Der Mittelwert aus mindestens 12 Einzelmessungen gelangt zur Auswertung. Außerdem wird beurteilt, in welchem Ausmaß das Verstärkungselement nach der Trennung mit Gummi bedeckt ist (Bedeckungsgrad).

b) Das zweite Prüfverfahren entspricht der Prüfvorschrift DIN 22 131, Blatt 3. Die Prüflänge beträgt 100 mm. Die spezifische Ausreißkraft wird als Quotient aus der gemessenen Ausreißkraft und Prüflänge ermittelt. Die Bedeckung des Festigkeitsträgers wird beurteilt. Gegebenenfalls wird die Haftung erst nach vorheriger Alterung der Mischung in der Form (22 Min/145°C) bestimmt.

Le A 22 454

Die Resultate sind in der nachfolgenden Tabelle zusammengefaßt. Sie zeigen, daß die erfindungsgemäßen Verfahren 1 und 2 mit verschiedenen Testrezepturen und Festigkeitsträgern unterschiedlichen Durchmessers zu Haftungen führten, die in der Regel besser als die Zerreißfestigkeit des vulkanisierten Kautschuks sind.

GFK bedeutet dabei "Glasfaserverstärkter Kunststoff".

Ausgehärtete und nicht ausgehärtete GFK-Seile zeigen ohne die erfindungsgemäße Vorbehandlung keine Haftung. Nach der Vulkanisation der entsprechenden Prüfkörper kann in der Regel die Trennung von Seil und Gummi ohne maschinelle Hilfe erfolgen. Nach der Trennung ist das Seil frei von Gummiresten.

Le A 22 454

Tabelle

| erfindungs-gemäßes Verfahren | Test-rezeptur Nr. | verwendeter Festigkeits-träger (Durchmesser) | Imprägnier-Verfahren | Vulkanisations-bedingungen | Prüf-methode | Trennkraft | Bedeckungs-grad |
|---|---|---|---|---|---|---|---|
| 1 | I | ausgehärtetes GFK-Profil (Ø 3,2 mm) | Methode A | 150°C/20 min | T-Test | 360 N/ 20 mm | Struktur-bruch im Gummi |
| 1 | II | ausgehärtetes GFK-Profil (Ø 6 mm) | Methode B | 150°C/30 min | DIN 22131 | 105 N/mm | Struktur-bruck im Gummi |
| 1 | II | ausgehärtetes GFK-Profil (Ø 6 mm) | Methode B | 150°C/30 min + Alterung 145°C/225 min | DIN 22131 | 100 N/mm | Struktur-bruck im Gummi |
| 1 | III | ausgehärtetes GFK-Profil (Ø 6 mm) | Methode B | 160°C/40 min | DIN 22131 | 90 N/mm | teilweise Struktur-bruch |
| 2 | IV | Prepreg (Ø 0,9 mm) | Methode B | 150°C/30 min | T-Test | 270 N/ 20 mm | teilweise Struktur-bruch |

## Patentansprüche

1. Verstärkungselemente für Elastomere auf der Basis von Festigkeitsträgern aus Verstärkungsfasern und Reaktionsharzen, dadurch gekennzeichnet, daß sie mit Haftvermittlern auf Polyisocyanatbasis ausgerüstet sind.

2. Verstärkungselemente nach Anspruch 1, dadurch gekennzeichnet, daß die Festigkeitsträger nicht vollständig ausgehärtete Faserverbundwerkstoffe (Prepregs) sind.

3. Verstärkungselemente nach Anspruch 1, dadurch gekennzeichnet, daß die Fasern Glasfasern sind.

4. Verstärkungselemente nach Anspruch 1, dadurch gekennzeichnet, daß als Harze ungesättigte Polyesterharze verwendet werden.

5. Verfahren zur Herstellung verstärkter Elastomere, dadurch gekennzeichnet, daß eine innige Mischung aus Verstärkungselementen nach Anspruch 1 und Elastomeren vulkanisiert wird.

6. Verstärkte Elastomere, bestehend aus einer gemeinsam vulkanisierten innigen Mischung aus Verstärkungselementen nach Anspruch 1, Elastomeren und gegebenenfalls weiteren üblichen Zusätzen.

Le A 22 454